# FASCICULE DE BREVET EUROPEEN

(11) **EP 0 624 807 B1**
(45) Date de publication et mention de la délivrance du brevet: **24.06.1998**
(21) Numéro de dépôt: 94400935.6
(22) Date de dépôt: 29.04.1994
(51) Int. Cl.: G02B 5/08

(54) **Procédé de fabrication d'un réflecteur à support en composite à matrice métallique, et réflecteur ainsi obtenu**
Herstellungsverfahren für einen Spiegel mit einem Träger aus Metalmatrix-Verbundmaterial, und so hergestellter Spiegel
Process of fabrication of a reflector with a metal matrix composite support, and reflector produced this way

(30) Priorité: 10.05.1993 FR 9305569
(43) Date de publication de la demande: 17.11.1994
(73) Titulaire: AEROSPATIALE Société Nationale Industrielle, 75781 Paris Cédex 16 (FR)
(72) Inventeur: Abiven, Henri, F-78250 Oinville (FR)
(74) Mandataire: Rinuy, Santarelli

(56) Documents cités:
- EP-A- 0 558 991
- WO-A-86/04297
- GB-A- 2 008 275
- US-A- 4 659 548
- PROCEEDINGS OF THE SPIE, vol.1303, 1990, BELLINGHAM , US pages 554 - 561 WENDT ET AL.

## Description

L'invention concerne la fabrication d'un réflecteur comportant une surface réfléchissante métallique propre à réfléchir un rayonnement lumineux (on parle alors souvent de miroirs optiques) ou non (infrarouge, etc...) et un support en composite à matrice métallique que longe cette surface.

L'utilisation des matériaux composites à matrice métallique pour des structures dimensionnellement stables, telles que supports d'optiques par exemple, est connue. Ces matériaux en effet présentent notamment les avantages suivants :
- ces matériaux étant étanches, il n'y a pas d'absorption d'humidité, ni donc de désorption, ce qui est favorable à des applications, notamment spatiales, où la désorption pourrait induire des déformations parasites (voire une pollution de capteurs),
- ces matériaux étant thermiquement conducteurs, en particulier dans le sens de l'épaisseur, l'équilibrage thermique de la structure est grandement facilité.

Ces deux qualités, associées au fait que les performances mécaniques (rigidité spécifique et résistance spécifique) et les coefficients de dilatation demeurent intéressants, font que les composites à matrice métallique (en particulier ceux en alliages légers tels que : aluminium et leurs alliages, magnésium et leurs alliages, ou ceux en cuivre et alliages de cuivre intéressants en raison de leur conductibilité thermique et leur tenue en température) et les composites à matrice intermétallique (notamment aluminiure de titane, aluminiure de nickel intéressants en raison de leur tenue à haute température) sont des matériaux tout particulièrement adaptés pour être utilisés dans toutes les structures nécessitant une grande stabilité dimensionnelle, telle que les télescopes par exemple spatiaux ou non.

De manière classique, la surface réfléchissante, métallique ou non, est fixée à son support, par exemple par collage ou par dépôt électrolytique, postérieurement à la réalisation du support.

On peut citer à ce propos l'article de SULTANA et FORMAN du MIT, Lincoln Lab., Lexignton, MA, USA, intitulé "Dimensional stability concerns in the manufacture of graphite/epoxy beam steering mirrors", paru dans Proceedings of SPIE - The International Society for Optical Engineering, Conference tenue à San Diego, CA, USA, les 12 et 13 Juillet 1990 - qui propose un miroir pour cavité laser dans un radar spatial comportant une matrice graphite/epoxy à laquelle un revêtement aluminium est collé, à température ambiante, avec un adhésif epoxy.

On peut par ailleurs citer l'article de WENDT et MISRA, de MARTIN-MARIETTA ASTRONAUTICS GROUP, DENVER, CO, USA, intitulé "Fabrication of near-net shape graphite-magnesium composite for large mirrors" et paru dans Advances in optical structure systems ; Proceedings of the Meeting, Orlando, FL, Apr. 16-19, 1990 (A91 - 36651 15-74), Ballingham, WA, Society of Photo-Optical Instrumentation Enginers, 1990, pp 554-561, qui concerne la fabrication de grands miroirs stables pour bases spatiales de surveillance et systèmes laser, comportant un support en composite carbone/magnésium sur lequel on dépose une couche de cuivre de 127 µm.

Le fait de rapporter la surface réfléchissante sur un support déjà formé a notamment pour inconvénients que :
- l'interface entre support et surface réfléchissante constitue une discontinuité dans le sens de l'épaisseur du réflecteur, qui peut conduire au moins localement à des délaminages en cas par exemple de cyclage thermique, ou qui peut conduire à une dégradation de la performance de stabilité dimensionnelle du support (absorption-désorption dans le cas d'un collage, jeux dans le cas de liaisons mécaniques ...),
- la géométrie de la surface réfléchissante est déterminée par la géométrie du support, ainsi que la qualité du procédé utilisé pour rapporter cette surface réfléchissante, ce qui implique presque toujours un usinage ultérieur de la surface pour respecter l'exigence de forme,
- la masse et le coût du réflecteur sont plus élevés.

L'invention a pour objet de pallier les inconvénients précités.

L'idée à la base de l'invention est de déterminer directement la géométrie de la surface utile (surface libre) de la surface réfléchissante, et d'assurer autant que possible une continuité dans l'épaisseur du réflecteur entre la surface réfléchissante et son support.

L'invention propose à cet effet un procédé de fabrication d'un réflecteur formé d'une couche métallique réfléchissante s'étendant sur un support composite à matrice métallique, selon lequel :
- on dispose, sur une surface de moule ayant une forme géométrique complémentaire de la forme géométrique voulue pour le réflecteur, une couche métallique ayant une surface réfléchissante de forme au moins approximativement identique à ladite forme géométrique voulue,
- on drape sur cette couche métallique des fibres destinées à constituer le support composite, ces fibres étant métallisées par de la matière métallique ou intermétallique destinée à former ladite matrice métallique,
- on soumet cette couche et ces fibres métallisées à des conditions de température et de pression propres à plaquer étroitement ladite surface réfléchissante contre ladite surface de moule et à générer un soudage-diffusion à la fois de la couche avec les fibres métallisées et des fibres métallisées entre elles, en sorte d'intégrer la couche au support composite au cours de la consolidation dudit support.

Selon des caractéristiques préférées de l'invention, éventuellement combinables :
- les fibres sont en carbone, ou en graphite,
- on dispose les fibres de façon symétrique de part et d'autre d'une surface médiane de symétrie,
- ces fibres sont libres, les unes par rapport aux autres au moment où on les drape sur la couche métallique,
- ces fibres sont réparties en un nombre pair de nappes disposées de façon symétrique de part et d'autre d'une surface médiane de symétrie,
- les fibres métallisées sont préparées par dépôt physique en phase vapeur d'une couche de métallisation sur les fibres, grâce à quoi les fibres métallisées sont souples,
- au lieu d'être libres, ces fibres peuvent être regroupées au sein de torons,
- les torons de fibres métallisées sont obtenus par trempage dans l'alliage fondu ou par infiltration,
- selon encore une autre variante, ces fibres peuvent être regroupées au sein de plaques dans lesquelles ces fibres ont une, deux ou trois directions d'alignement,
- les plaques de fibres métallisées à une, deux ou trois directions d'alignement sont obtenues par infiltration de l'alliage fondu sous pression,
- la matière métallique ou intermétallique de métallisation est choisie dans le groupe formé de l'aluminium et de ses alliages, du magnésium et de ses alliages, du cuivre et de ses alliages, du titane et de ses alliages, et d'aluminiures, notamment aluminiures de titane et aluminiures de nickel,
- on dispose ladite couche métallique sur la surface de moule sous forme d'une ou plusieurs feuille(s),
- on obtient ladite couche métallique par préparation d'une ébauche métallique ayant une surface d'ébauche au moins approximativement identique à la forme géométrique voulue, cette ébauche étant, au moins dans une partie de son épaisseur sous-jacente à cette surface d'ébauche, déformable dans lesdites conditions de température et de pression,
- cette ébauche est, dans toute son épaisseur, déformable dans lesdites conditions de température et de pression,
- cette ébauche métallique comporte une couche de base rigide et une couche de revêtement formée d'une matière déformable dans lesdites conditions de température et de pression,
- cette couche de revêtement est réalisée par projection en plasma d'une ou plusieurs poudres métalliques sur cette couche de base rigide,
- on dispose ladite couche métallique sur la surface du moule par projection en plasma d'une ou plusieurs poudres métalliques,
- la couche métallique comporte un ou plusieurs matériaux métalliques choisis dans le groupe formé de l'aluminium et ses alliages, du magnésium et ses alliages, du cuivre et ses alliages, de nickel et ses alliages, du titane et de ses alliages, des aluminiures, notamment aluminiures de titane et aluminiures de nickel,
- on fait subir au réflecteur un polissage,
- on dépose sur la couche réfléchissante un revêtement complémentaire,
- ce revêtement complémentaire est préférentiellement de l'or obtenu par dépôt sous vide ou par voie chimique,
- on dépose sur les fibres, à l'opposé de la couche métallique, une couche de protection contre l'oxydation.

On appréciera que l'invention permet de réaliser un réflecteur en matériaux composites à matrice métallique dont la couche réfléchissante, en fin de consolidation des fibres métallisées :
- respecte la forme spécifiée (sans usinage ultérieur, mais avec simple polissage éventuel),
- est liée métallurgiquement par soudage diffusion au reste de la structure (sans collage), permettant ainsi l'emploi de matériaux à coefficients de dilatation thermique et à modules d'Young nettement différents de ceux du composite.

Pour obtenir la forme spécifiée, la solution proposée consiste à placer sur le moule, préalablement usiné et poli, enduit d'un démoulant, de tout type connu approprié, une couche métallique déformable (conformable ...) et soudable par diffusion au reste de la structure dans les conditions de consolidation des fibres métallisées. Cette couche métallique déformable peut être :
- un dépôt par projection plasma de poudres métalliques directement sur le moule, la nature du métal étant telle qu'il soit soudable par diffusion au reste de la structure,
- une ébauche métallique, préformée préalablement de façon classique à des cotes approchées de la forme spécifiée, dont le matériau est déformable plastiquement ou superplastiquement et soudable par diffusion au reste de la structure, dans les conditions de consolidation des fibres métallisées,
- un dépôt par projection de plasma de poudres métalliques sur la face externe (destinée à faire face au moule) d'une ébauche métallique, préformée préalablement de façon classique à des cotes approchées de la forme spécifiée, dont le matériau peut ne pas être déformable plastiquement aux conditions de consolidation des fibres métallisées, ... les poudres métalliques projetées doivent pouvoir se souder par diffusion à l'ébauche métallique en cours de consolidation ; de même l'ébauche métallique et la matrice métallique doivent être également soudables par diffusion (dans le cas présent, l'ensemble "dépôt plasma + ébauche préformée" est posé sur le moule, "dépôt plasma" placé contre le moule).

L'invention concerne également un réflecteur obtenu selon ce procédé, c'est-à-dire un réflecteur formé d'une couche métallique réfléchissante s'étendant sur un support composite à matrice métallique ou intermétallique, caractérisé en ce que les matrices métalliques ou intermétalliques du support et de la couche réfléchissante sont imbriquées.

Il est à noter que le document EP-A-0.558.991, qui fait seulement partie de l'état de la technique au sens de l'article 54(3) CBE, décrit un réflecteur obtenu, après préparation d'un support en matériau résistant à haute température, par dépôt d'une couche de silicium sur ce support et solidarisation par apport de chaleur. Le support est, selon les exemples, un support composite à matrice carbone et/ou céramique avec éventuel enrichissement en silicium (le silicium est un métalloïde, intermédiaire entre les métaux et les non-métaux).

Selon d'autres caractéristiques préférées de l'invention, éventuellement combinables :
- les matières métalliques ou intermétalliques du support et de la couche réfléchissante sont différentes et leurs concentrations varient continûment en allant du support vers la couche réfléchissante, et réciproquement ; en variante, ces matières métalliques peuvent être identiques,
- le support est symétrique de part et d'autre d'une surface médiane de symétrie,
- le support comporte une superposition de nappes de fibres d'orientation différentes d'une nappe à l'autre,
- les fibres sont en carbone,
- la matrice métallique est formée d'un ou plusieurs matériaux choisis dans le groupe formé de l'aluminium et de ses alliages, du magnésium et de ses alliages, du cuivre et de ses alliages, du titane et aluminiures de nickel,
- la couche métallique réfléchissante est formée d'un ou plusieurs matériaux choisis dans le groupe formé de l'aluminium et ses alliages, du magnésium et ses alliages, du cuivre et ses alliages, de nickel et ses alliages, du titane et aluminiures de nickel,
- la matrice est longée, à l'opposé de la couche métallique, par une couche de protection contre l'oxydation.

Des objets, caractéristiques et avantages de l'invention ressortent de la description qui suit, donnée à titre d'exemple non limitatif, en regard des dessins annexés sur lesquels :
- la figure 1 est une vue schématique en coupe transversale d'un empilage de couches réalisé lors de la réalisation d'un premier réflecteur, de forme concave,
- la figure 2 est une vue schématique en coupe transversale d'un autre empilage de couches réalisé lors de la réalisation d'un second réflecteur, de forme plane,
- la figure 3 est une vue schématique en coupe transversale correspondant à un troisième réflecteur, de forme plane, et
- la figure 4 est une vue schématique en coupe transversale correspondant à un quatrième réflecteur, de forme plane.

Ces figures décrivent chacune la réalisation par soudage-diffusion d'un réflecteur comportant une surface réfléchissante métallique s'étendant sur un support de grandes dimensions mais de faible épaisseur, en composite à matrice métallique ou intermétallique. Il s'agit de préférence, mais pas nécessairement, de fibres longues.

Comme le sait l'homme de l'art, n'importe quel métal ou alliage ne s'associe pas nécessairement avec n'importe quel autre par soudage-diffusion : il arrive même que certaines associations provoquent des réactions violentes sous certaines conditions de température et de pression ; en conséquence les éventuels éléments métalliques incompatibles seront séparés par un ou plusieurs éléments métalliques intermédiaires compatibles chacun avec les deux éléments métalliques qui lui sont adjacents. Par ailleurs, il sera porté une grande attention à éviter la création d'eutectiques éventuels.

La réalisation du réflecteur nécessite un moule de formage, et ce dernier est choisi en sorte d'avoir la géométrie voulue pour la face externe de la surface réfléchissante. Les éléments métalliques (aluminium, nickel, cuivre, ...) devant constituer la surface réfléchissante sont disposés sur le moule préalablement enduit de démoulant ; on dispose ensuite, sur les éléments métalliques devant constituer la surface réfléchissante, des fibres métallisées, de préférence des fibres longues (de plusieurs centimètres voire dizaines de centimètres) ; au cours d'une même opération de soudage-diffusion (sous une pression, à une température, et durant un temps, dépendant des métaux en présence), les divers éléments métalliques sont compactés et se lient par diffusion les uns aux autres et au reste du composite ; au démoulage, l'ensemble du réflecteur présente un poli de surface dépendant de celui du moule. Si le poli de la surface réfléchissante obtenu n'est pas suffisant, un polissage complémentaire peut être réalisé et des revêtements classiques de surface peuvent être réalisés (Cr, Au, ...) ; ces revêtements classiques sont d'épaisseur (typiquement 300 Å) très inférieure à celle de la surface réfléchissante. Les éléments métalliques peuvent être apportés sur la surface du moule par toute technique connue appropriée de dépôt, telle que par exemple projection thermique en plasma. Dans le cas de surfaces planes ou développables, les éléments métalliques devant constituer la surface réfléchissante peuvent être apportés sous forme de feuilles ou feuillards métalliques déformables plastiquement, placés sur le moule préalablement enduit de démoulant ; comme précédemment, la ou les feuille(s) ou feuillard(s) se lie(nt) par soudage-diffusion aux constituants du composite ; après démoulage, si le poli de la surface réfléchissante n'est pas suffisant, la surface externe peut être polie. En variante, les éléments métalliques peuvent être apportés par dépôt sur une couche métallique de base, également formée de tout ou partie desdits éléments métalliques sur une surface de cette couche de base ayant au moins approximativement la forme géométrique souhaitée pour la surface réfléchissante ; cette couche de base est ensuite posée sur la surface de moule, la surface revêtue faisant face à cette surface de moule. La conformité exacte à la géométrie voulue de la surface réfléchissante ainsi obtenue résulte alors, comme dans le cas précité de feuilles ou feuillards, de la déformation plastique de ce revêtement, voire de la couche de base, dans les conditions de température et de pression permettant la consolidation/soudage-diffusion, en sorte d'épouser intimement la surface du moule.

Il est important de noter que, selon l'invention, la surface réfléchissante est réalisée en même temps que son support auquel elle est intimement liée (il y a interdiffusion des atomes d'où une continuité métallurgique dans le sens de l'épaisseur du réflecteur).

Un exemple type de réalisation d'un miroir selon la présente invention est donné ci-dessous :
1. polissage de la face externe du moule
2. enduction du moule par un démoulant
3. dépôt sur le moule enduit des éléments métalliques de la surface réfléchissante (on vient de voir qu'il y avait d'autres manières que le dépôt pour apporter les éléments métalliques),
4. drapage sur le moule, revêtu des éléments métalliques, des "préimprégnés" métallisés, le drapage étant de préférence tel qu'il existe une surface centrale de symétrie du composite (cette surface, même lorsque le réflecteur voulu est convexe, concave ou mixte, est au moins assimilable localement à un plan, d'autant que le rayon de courbure du réflecteur est en pratique souvent très supérieur à son épaisseur),
5. application du cycle de consolidation à chaud sur la forme drapée issue de l'opération 4 : température maximale typiquement comprise entre 400°C et 650°C, pression typiquement comprise entre 5 et 300 MPa, durée comprise entre 15 minutes et 3 heures pour les matrices d'alliages légers, tandis que pour les matrices intermétalliques, les caractéristiques sont plutôt 900 à 1200°C sous une pression de 200 MPa pendant 30 minutes à 1 heure(les valeurs réelles à appliquer dépendent de la matrice considérée et des éléments métalliques en présence),
6. démoulage et nettoyage de la surface réfléchissante,
7. éventuellement : polissage complémentaire et revêtement complémentaire.

Les "préimprégnés" métallisés mentionnés ci-dessus peuvent être de différentes sortes, leur caractéristique principale étant qu'ils se mettent en oeuvre par soudage-diffusion :
- fibres de carbone métallisées, obtenues par exemple par métallisation par dépôt physique en phase vapeur de filaments de carbone,
- torons de fibres de carbone métallisées par trempage dans l'alliage fondu,
- plaques de fibres de carbone, 1D - 2D ou 3D, métallisées par infiltration de l'alliage fondu.

Concernant les matrices, en principe, tout métal peut être utilisé selon la présente invention. Néanmoins, il est évident que, compte tenu en particulier de leur densité, l'aluminium et ses alliages ainsi que le magnésium et ses alliages sont des matrices préférentielles pour des applications aéronautiques ou spatiales. De même, en cas de besoin de tenue en température supérieure à 400°C, une matrice en cuivre ou en ses alliages peut être intéressante, comptenu en outre de sa bonne conductibilité thermique. Pour des besoins de tenues en température de 800 à 1000°C, les matrices d'aluminiures de nickel et/ou de titane sont préférées.

Concernant les fibres, elles sont de préférence en carbone ; les plus intéressantes sont celles présentant un très haut module, une très grande résistance à la rupture ainsi qu'un coefficient de dilatation le plus négatif possible associé à une conductivité thermique élevée. Les fibres à base de brai, telles que par exemple la fibre TONEN FT 700, sont particulièrement intéressantes ; les caractéristiques de la FT 700 sont :
- densité 2,16 g/cm³
- résistance en traction 3300 MPa
- module d'élasticité 700 GPa
- diamètre φ 10 µm
- nombre de filaments par mèche 3000 (3 K)
- coefficient de dilatation thermique α_{L} -1,5 10⁻⁶K⁻¹

En variante, les fibres sont en carbure de silicium ou en alumine.

### EXEMPLES DE REALISATION

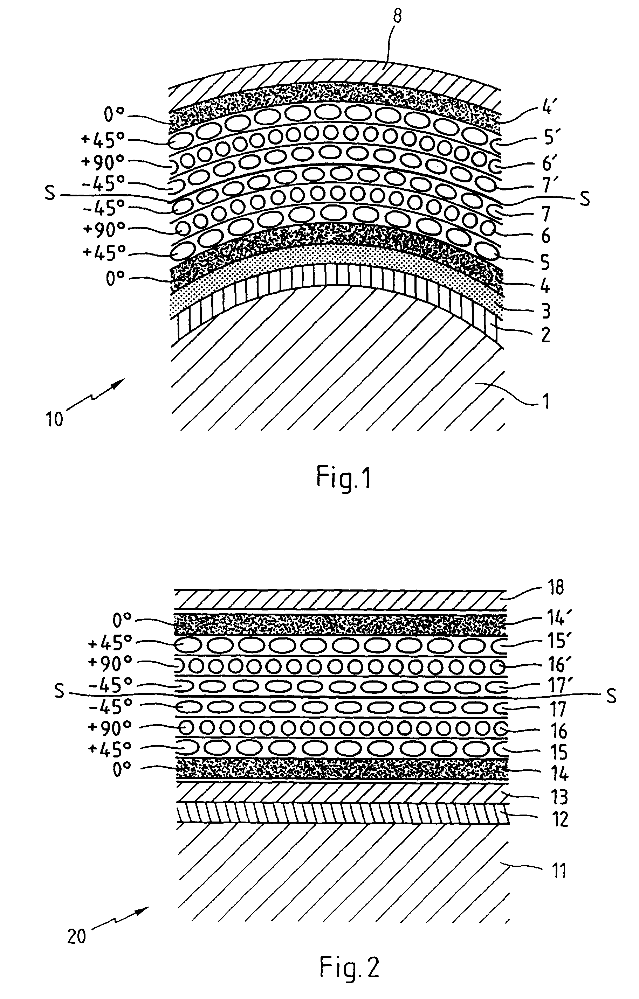

### a) Premier exemple (voir figure 1).

Sur un moule convexe en molybdène poli 1, enduit de nitrure de bore (démoulant 2), on dépose par projection plasma des poudres d'aluminium de type A9 (c'est-à-dire pur à 99,9 %). Sur ce dépôt, repéré 3, d'épaisseur de 120 µm, on vient draper de façon quasi-isotrope ( 0°, + 45°, + 90°, - 45°, - 45°, + 90°, + 45°, 0°) des couches 4 à 7 et 7' à 4' de fibres de carbone à très haut module d'élasticité (FT 700) préalablement métallisées par dépôt physique en phase vapeur d'aluminium pur (A5) (le procédé de dépôt physique en phase vapeur étant de type directif, les mèches de FT 700 ont été au préalable étalées par soufflage d'air en pratique transversal (type sèche-cheveux)) de façon à faciliter la métallisation de chaque filament ; une feuille 8 d'aluminium pur (A5), d'épaisseur 100 µm, est ensuite posée. L'ensemble ainsi constitué est consolidé à chaud (595°C) et sous pression (25 MPa) avec un maintien de ces conditions maxima de pression et de température durant 25 minutes, et sous un vide de 10⁻² Torr. Le composite est constitué par soudage-diffusion tandis que la couche 3 lui est intégrée, et après démoulage on obtient un miroir 10 en matériau composite à matrice aluminium dont le revêtement de surface en aluminium a un poli dépendant de celui du moule en molybdène (si le poli n'était pas suffisant, un polissage de la surface pourrait être effectué).

En pratique, le nombre de couches ou nappes de fibres est très supérieur aux huit couches de la figure 1 ; puisque leur épaisseur unitaire est de l'ordre de la dizaine de micromètres et que les épaisseurs voulues pour le support sont couramment de l'ordre de quelques millimètres.

L'intérêt de la couche d'aluminium 8, d'épaisseur similaire à celle de la couche utile 3, est de fournir une protection et de garantir la symétrie par rapport à son plan médian, ce qui a pour avantage d'éviter les déformations au refroidissement consécutif à l'opération de consolidation.

On notera ici que le drapage quasi-isotrope correspond ici à la superposition de nappes de fibres dont l'orientation change de 45° en passant d'une couche à l'autre ; l'empilement de ces nappes admet une surface médiane de symétrie repérée S de part et d'autre de laquelle les orientations des nappes sont disposées de façon symétrique : cela a l'avantage d'éviter les déformations au refroidissement.

Les caractéristiques suivantes ont été obtenues sur une plaque quasi-isotrope de 200 mm x 200 mm x 2,8 mm,cette fois-ci plane, avec un taux de fibre (c'est-à-dire la proportion massique de fibres nues par rapport aux mêmes fibres après métallisation) de 50 % réalisée suivant les mêmes conditions :
- E (module d'Young) = 133 GPa
- coefficient de dilatation thermique α_{L} = 2,65(10⁻⁶°C⁻¹)
- coefficient de conductibilité thermique transverse K_{T} = 152 (W.m⁻¹°C⁻¹)
- densité ρ = 2,4 g/cm³

### b) Deuxième exemple (voir figure 2)

Sur un moule en acier inoxydable réfractaire 11, enduit d'un démoulant 12 en nitrure de bore, on pose une feuille 13 d'aluminium 7475 superplastique d'épaisseur 120 µm en lui donnant approximativement la forme finale voulue. Sur cette feuille, on vient draper de façon quasi-isotrope des couches 14 à 17 et 17' à 14' de fibres métallisées (A5) de carbone à très haut module d'élasticité FT 700. Sur ce sous-ensemble drapé on vient poser une feuille 18 d'aluminium (A5) de 100 µm d'épaisseur. L'ensemble ainsi constitué est consolidé à chaud suivant le cycle défini pour le premier exemple. Après soudage-diffusion de l'ensemble, la pièce est démoulée et la face active 13 en aluminium superplastique s'est déformée pour prendre exactement la forme du moule, donnant ainsi un miroir 20 possédant dans son ensemble un plan central de symétrie S. Un polissage final peut être réalisé et un revêtement complémentaire de 30 nm d'or peut être obtenu par dépôt sous vide ou voie chimique.

Les caractéristiques obtenues sont similaires à celles du premier exemple.

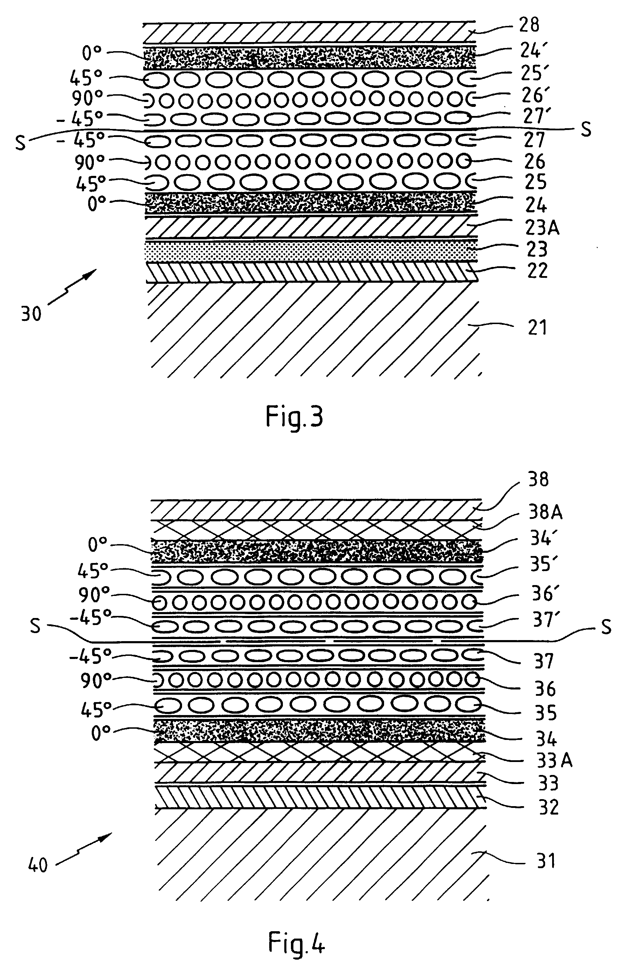

### c) Troisième exemple (voir figure 3)

Sur un moule plan en molybdène poli 21, enduit d'un démoulant 22 en nitrure de bore, on dépose en projection plasma des poudres d'aluminium (A9). Sur ce dépôt 23 d'épaisseur 100 µm, on pose une feuille de titane 23A (T 40) de 10 µm d'épaisseur. Sur cette feuille 23A, on vient draper de façon quasi-isotrope des couches 24 à 27 et 27' à 24' de fibres de carbone très haut module FT 700 métallisées par un alliage de magnésium (GA6Z1) par dépôt physique en phase vapeur. Sur ce sous-ensemble drapé, on vient poser une feuille 28 de même nature que la couche 23A, c'est-à-dire une feuille de titane T 40 (épaisseur 10 µm). L'ensemble ainsi constitué est consolidé à chaud suivant le cycle suivant :
- température maximale : 490°
- pression : 25 MPa
- vide : 10⁻² Torr
- durée de maintien : 30 minutes

Par soudage-diffusion, le composite est constitué tandis que la couche 23 s'interpénêtre avec la couche 23A et que celle-ci s'interpénêtre avec le composite. Après démoulage on obtient un miroir 30 à matériau composite à matrice magnésium dont le revêtement de surface en aluminium a le poli dépendant de celui du moule en molybdène. La couche de titane 23A sert d'intermédiaire entre l'aluminium et le magnésium qui, mis en contact, auraient donné naissance à un eutectique. La feuille de titane 28 sert à protéger le magnésium contre l'oxydation.

Les caractéristiques suivantes ont été obtenues sur une plaque plane quasi-isotrope de 200 mm x 200 mm x 2,8 mm, avec un taux de fibre de 50 %
- E = 127 GPa
- α_{L} = 2,10(10⁻⁶°C⁻¹)
- K_{T} = 88 (W.m⁻¹°C⁻¹)
- ρ = 2 g/cm³

En variante, le dépôt 23 peut être réalisé sur la feuille 23A avant sa mise en place contre la surface du moule.

### d) Quatrième exemple (voir figure 4)

Sur un moule en acier inoxydable réfractaire 31, enduit d'un démoulant en nitrure de bore 32, on pose une feuille 33 d'aluminium 7475 superplastique de 100 µm d'épaisseur, puis une feuille 33A de titane pur (T 40) de 10 µm d'épaisseur, puis on empile huit plaques (0,5 mm d'épaisseur) unidirectionnelles 34 à 37 et 37' à 34' (à une seule direction d'alignement des fibres) formées de fibres de carbone FT 700, ces plaques étant métallisées par infiltration à basse pression de magnésium (AZ 61) dans des mèches de carbone ; ces plaques sont placées de manière à ce que les fibres constituent un renforcement quasi isotrope. Sur cet empilement, on pose une feuille 38A de titane (T 40) de 10 µm d'épaisseur, puis une feuille 38 d'aluminium 7475 superplastique d'épaisseur 100 µm. Cet ensemble est consolidé aux conditions définies dans l'exemple c). Après démoulage, la face active en aluminium (celle côté moule) a pris la forme de la surface du moule, donnant ainsi un miroir 40 possédant un plan central de symétrie S.

Les caractéristiques obtenues sont du même ordre de grandeur que celles de l'exemple c).

### e) Cinquième exemple (non représenté)

Pour des miroirs nécessitant une grande rigidité, les miroirs définis ci-dessus peuvent être utilisés comme semelles dans des constructions sandwichs dont l'âme est par exemple un nid d'abeilles en aluminium, les semelles étant liées à l'âme par collage conducteur thermique ou, mieux, par brasage basse température, les types de brasure étant fonction de la nature des éléments à assembler.

Les divers exemples précités ont ceci en commun qu'ils correspondent chacun à un miroir de grande stabilité dimensionnelle, comprenant des fibres de carbone dans une matrice métallique ou intermétallique (aluminium, alliage d'aluminium, magnésium, alliages de magnésium, cuivre ou alliages de cuivre). La structure du miroir est réalisée par soudage diffusion de nappes de fibres de carbone métallisées, de torons de fibres de carbone métallisées, ou de plaques de fibres de carbone préimprégnées avec un plan central de symétrie, et le revêtement métallique réfléchissant est intégré au support par soudage diffusion au cours de l'opération de consolidation du composite, la diffusion vers le moule étant inhibée par un démoulant. On obtient ainsi, en une seule opération, un miroir comportant une surface réfléchissante métallique dont la qualité de poli dépend de celle du moule et présentant des caractéristiques de stabilité dimensionnelle excellentes : module spécifique, résistance spécifique, coefficient de dilatation, conductibilité thermique transverse, absence d'absorption d'humidité. En cas de besoin, le revêtement externe peut être poli, après démoulage, et recevoir des revêtement supplémentaires classiques tels que (Cr, Au ...).

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Procédé de fabrication d'un réflecteur (10, 20, 30, 40) formé d'une couche métallique réfléchissante s'étendant sur un support composite à matrice métallique, selon lequel :
- on dispose, sur une surface de moule (1, 11, 21, 31) ayant une forme géométrique complémentaire de la forme géométrique voulue pour le réflecteur, une couche métallique (3 ; 13 ; 23, 23A ; 33, 33A) ayant une surface réfléchissante de forme au moins approximativement identique à la forme géométrique voulue,
- on drape sur cette couche métallique des fibres ( 4-7, 7'-4' ; 14-17 , 17'-14' ; 24-27, 27'-24' ; 34-37, 37'-34') destinées à constituer le support composite, ces fibres étant métallisées par de la matière métallique ou intermétallique destinée à former ladite matrice métallique,
- on soumet cette couche et ces fibres métallisées à des conditions de température et de pression propres à plaquer étroitement ladite surface réfléchissante contre ladite surface de moule et à générer un soudage-diffusion à la fois de la couche avec les fibres métallisées et des fibres métallisées entre elles, en sorte d'intégrer la couche au support composite au cours de la consolidation dudit support.

2. Procédé de fabrication selon la revendication 1, caractérisé en ce que les fibres sont en carbone.

3. Procédé de fabrication selon la revendication 1 ou la revendication 2, caractérisé en ce qu'on dispose les fibres de façon symétrique de part et d'autre d'une surface médiane de symétrie (S).

4. Procédé de fabrication selon l'une quelconque des revendications 1 à 3, caractérisé en ce que ces fibres sont drapées à l'état libre.

5. Procédé de fabrication selon la revendication 4, caractérisé en ce que ces fibres sont réparties en un nombre pair de nappes disposées de façon symétrique de part et d'autre d'une surface médiane de symétrie (S).

6. Procédé de fabrication selon l'une quelconque des revendications 1 à 5, caractérisé en ce que les fibres métallisées sont préparées par dépôt physique en phase vapeur d'une couche de métallisation sur les fibres, grâce à quoi les fibres métallisées sont souples.

7. Procédé de fabrication selon l'une quelconque des revendications 1 à 3, caractérisé en ce que ces fibres sont regroupées au sein de torons.

8. Procédé de fabrication selon la revendication 7, caractérisé par le fait que les torons de fibres métallisées sont obtenus par trempage dans un bain de la matière métallique à l'état fondu ou par infiltration.

9. Procédé de fabrication selon l'une quelconque des revendications 1 à 3, caractérisé en ce que ces fibres sont regroupées au sein de plaques (34-37 ; 37'-34') dans lesquelles ces fibres ont une, deux ou trois directions d'alignement.

10. Procédé de fabrication selon la revendication 9, caractérisé par le fait que les plaques de fibres métallisées à une, deux ou trois directions d'alignement sont obtenues par infiltration de la matière métallique à l'état fondu sous pression.

11. Procédé de fabrication selon l'une quelconque des revendications 1 à 10, caractérisé en ce que la matière métallique ou intermétallique de métallisation est choisie dans le groupe formé de l'aluminium et de ses alliages, du magnésium et de ses alliages, du cuivre et de ses alliages, du titane et de ses alliages, et d'aluminiures, notamment aluminiures de titane et aluminiures de nickel.

12. Procédé selon l'une quelconque des revendications 1 à 11, caractérisé en ce qu'on dispose ladite couche métallique sur la surface de moule sous forme d'une ou plusieurs feuilles déformables (13 ; 23A ; 33, 33A).

13. Procédé selon l'une quelconque des revendications 1 à 11, caractérisé en ce qu'on obtient ladite couche métallique par préparation d'une ébauche métallique ayant une surface d'ébauche au moins approximativement identique à la forme géométrique voulue, cette ébauche étant, au moins dans une partie de son épaisseur sous-jacente à cette surface d'ébauche, déformable dans lesdites conditions de température et de pression.

14. Procédé selon la revendication 13, caractérisé en ce que cette ébauche est, dans toute son épaisseur, déformable dans lesdites conditions de température et de pression.

15. Procédé selon la revendication 13, caractérisé en ce que cette ébauche métallique comporte une couche de base rigide et une couche de revêtement formée d'une matière déformable dans lesdites conditions de température et de pression.

16. Procédé selon la revendication 15, caractérisé en ce que cette couche de revêtement est réalisée par projection en plasma d'une ou plusieurs poudres métalliques sur cette couche de base rigide.

17. Procédé de fabrication selon l'une quelconque des revendications 1 à 11, caractérisé en ce qu'on dispose ladite couche métallique sur la surface du moule par projection en plasma d'une ou plusieurs poudres métalliques.

18. Procédé de fabrication selon l'une quelconque des revendications 1 à 17, caractérisé en ce que la couche métallique comporte un ou plusieurs matériaux métalliques choisis dans le groupe formé de l'aluminium et ses alliages, du magnésium et ses alliages, du cuivre et ses alliages, de nickel et ses alliages, du titane et de ses alliages, des aluminiures, notamment aluminiures de titane et aluminiures de nickel.

19. Procédé de fabrication selon l'une quelconque des revendications 1 à 18, caractérisé en ce qu'on fait subir au réflecteur un polissage.

20. Procédé de fabrication selon l'une quelconque des revendications 1 à 19, caractérisé en ce qu'on dépose sur la couche réfléchissante un revêtement complémentaire.

21. Procédé de fabrication selon la revendication 20, caractérisé en ce que ce revêtement complémentaire est de l'or.

22. Procédé selon l'une quelconque des revendications 1 à 21, caractérisé en ce qu'on dépose sur les fibres, à l'opposé de la couche métallique, une couche (28) de protection contre l'oxydation.

23. Réflecteur formé d'une couche métallique réfléchissante (3;13;23;23A;33,33A) s'étendant sur un support composite à matrice métallique ou intermétallique, caractérisé en ce que les matrices métalliques ou intermétalliques du support et de la couche réfléchissante sont imbriquées.

24. Réflecteur selon la revendication 23, caractérisé en ce que les matières métalliques ou intermétalliques du support et de la couche réfléchissante sont différentes et leurs concentrations varient continûment en allant du support vers la couche réfléchissante, et réciproquement.

25. Réflecteur selon la revendication 23, caractérisé en ce que les matières métalliques ou intermétalliques du support et de la couche réfléchissante sont identiques.

26. Réflecteur selon l'une quelconque des revendications 23 à 25, caractérisé en ce que le support est symétrique de part et d'autre d'une surface médiane de symétrie(s).

27. Réflecteur selon l'une quelconque des revendications 23 à 26, caractérisé en ce que le support comporte une superposition de nappes de fibres (4-7, 7'-4'; 14-17, 17'-14'; 24-27, 27'-24'; 34-37, 37'-34') d'orientation différentes d'une nappe à l'autre.

28. Réflecteur selon l'une quelconque des revendications 23 à 27, caractérisé en ce que les fibres sont en carbone.

29. Réflecteur selon l'une quelconque des revendications 23 à 28, caractérisé en ce que la matrice métallique est formée d'un ou plusieurs matériaux choisis dans le groupe formé de l'aluminium et de ses alliages, du magnésium et de ses alliages, du cuivre et de ses alliages, du titane et de ses alliages, des aluminiures notamment aluminiures de titane et aluminiures de nickel.

30. Réflecteur selon l'une quelconque des revendications 23 à 29, caractérisé en ce que la couche métallique réfléchissante est formée d'un ou plusieurs matériaux choisis dans le groupe formé de l'aluminium et ses alliages, du magnésium et ses alliages, du cuivre et ses alliages, de nickel et ses alliages, du titane et de ses alliages, des aluminiures notamment aluminiures de titane et aluminiures de nickel.

31. Réflecteur selon l'une quelconque des revendications 23 à 30, caractérisé en ce que la matrice est longée, à l'opposé de la couche métallique, par une couche de protection contre l'oxydation (28).

## Claims

1. A method of manufacturing a reflector (10, 20, 30, 40) formed by a reflective metallic layer on a metallic matrix composite support, characterised in that:
- a metallic layer (3; 13; 23, 23A; 33, 33A) having a reflective surface whose shape is at least approximately identical to the required geometrical shape is disposed on a mould surface (1, 11, 21, 31) having a geometrical shape complementary to the required geometrical shape of the reflector,
- fibres (4-7, 7'-4'; 14-17, 17'-14'; 24-27, 27'-24'; 34-37, 37'-34') adapted to constitute the composite support are draped on said metallic layer, said fibres being metallised by the metallic or intermetallic material adapted to form said metallic matrix,
- said layer and said metallised fibres are subjected to temperature and pressure conditions adapted to press said reflective surface strongly against said mould surface and to cause diffusion welding of the layer with the metallised fibres and of the metallised fibres with themselves so as to integrate the layer to the composite support during consolidation of said support.

2. A manufacturing method according to claim 1 characterised in that the fibres are carbon fibres.

3. A manufacturing method according to claim 1 or claim 2 characterised in that the fibres are disposed symmetrically on either side of a median surface of symmetry (S).

4. A manufacturing method according to any one of claims 1 to 3 characterised in that said fibres are draped in the free state.

5. A manufacturing method according to claim 4 characterised in that said fibres are divided into an even number of layers disposed symmetrically to either side of a median surface of symmetry (S).

6. A manufacturing method according to any one of claims 1 to 5 characterised in that the metallised fibres are prepared by vapour phase physical deposition of a layer of metallisation onto the fibres so that the metallised fibres are flexible.

7. A manufacturing method according to any one of claims 1 to 3 characterised in that said fibres are stranded.

8. A manufacturing method according to claim 7 characterised in that the stranded metallised fibres are metallised by dipping them into a bath of molten metallic material or by infiltration.

9. A manufacturing method according to any one of claims 1 to 3 characterised in that said fibres are grouped in plates (34-37; 37'-34') in which said fibres have one, two or three alignment directions.

10. A manufacturing method according to claim 9 characterised in that the plates of metallised fibres having one, two or three alignment directions are obtained by infiltration of the metallic material in the molten state under pressure.

11. A manufacturing method according to any one of claims 1 to 10 characterised in that the metallic or intermetallic metallisation material is selected from the group comprising aluminium, aluminium alloy, magnesium, magnesium alloy, copper, copper alloy, titanium, titanium alloy and aluminides, in particular titanium aluminide and nickel aluminide.

12. A method according to any one of claims 1 to 11 characterised in that said metallic layer is placed on the mould surface in the form of one or more deformable films (13; 23A; 33, 33A).

13. A method according to any one of claims 1 to 11 characterised in that said metallic layer is obtained by preparation of a metallic blank having a blank surface at least approximately identical to the required geometrical shape, said blank being deformable under said temperature and pressure conditions at least in a part of its thickness underlying said blank surface.

14. A method according to claim 13 characterised in that said blank is deformable under said temperature and pressure conditions throughout its thickness.

15. A method according to claim 13 characterised in that said metallic blank includes a rigid base layer and a coating layer formed from a material that is deformable under said temperature and pressure conditions.

16. A method according to claim 15 characterised in that said coating layer is obtained by plasma spraying of one or more metallic powders onto said rigid base layer.

17. A manufacturing method according to any one of claims 1 to 11 characterised in that said metallic layer is applied to the surface of the mould by plasma spraying of one or more metallic powders.

18. A manufacturing method according to any one of claims 1 to 17 characterised in that the metallic layer includes one or more metallic materials selected from the group comprising aluminium, aluminium alloy, magnesium, magnesium alloy, copper, copper alloy, nickel, nickel alloy, titanium, titanium alloy and aluminides, in particular titanium aluminide and nickel aluminide.

19. A manufacturing method according to any one of claims 1 to 18 characterised in that the reflector is polished.

20. A manufacturing method according to any one of claims 1 to 19 characterised in that a further coating is applied to the reflective layer.

21. A manufacturing method according to claim 20 characterised in that said further coating is of gold.

22. A method according to any one of claims 1 to 21 characterised in that an oxidation protection layer (28) is deposited on the fibres on the opposite side to the metallic layer.

23. A reflector formed by a reflective metallic layer (3; 13; 23, 23A; 33, 33A) on a metallic or intermetallic matrix composite support characterised in that the metallic or intermetallic matrices of the support and the reflective layer are intermingled.

24. A reflector according to claim 23 characterised in that the metallic or intermetallic materials of the support and the reflective layer are different and their concentrations vary continuously in the direction from the support to the reflective layer and vice versa.

25. A reflector according to claim 23 characterised in that the metallic or intermetallic materials of the support and the reflective layer are identical.

26. A reflector according to any one of claims 23 to 25 characterised in that the support is symmetrical about a median surface of symmetry (S).

27. A reflector according to any one of claims 23 to 26 characterised in that the support includes superposed layers of fibres (4-7, 7'-4'; 14-17, 17'-14'; 24-27, 27'-24'; 34-37, 37'-34') with different orientations from one layer to the other.

28. A reflector according to any one of claims 23 to 27 characterised in that the fibres are carbon fibres.

29. A reflector according to any one of claims 23 to 28 characterised in that the metallic matrix is formed from one or more materials selected from the group comprising aluminium, aluminium alloy, magnesium, magnesium alloy, copper, copper alloy, titanium, titanium alloy and aluminides, in particular titanium aluminide and nickel aluminide.

30. A reflector according to any one of claims 23 to 29 characterised in that the reflective metallic layer is formed from one or more materials selected from the group comprising aluminium, aluminium alloy, magnesium, magnesium alloy, copper, copper alloy, nickel, nickel alloy, titanium, titanium alloy and aluminides, in particular titanium aluminide and nickel aluminide.

31. A reflector according to any one of claims 23 to 30 characterised in that said matrix has an oxidation protection layer (28) on the side opposite the metallic layer.

## Patentansprüche

1. Verfahren zur Herstellung eines Reflektors (10, 20, 30, 40), der aus einer reflektierenden Metallschicht gebildet ist, die sich auf einem Träger aus Metallmatrix-Verbundmaterial erstreckt, gemäß dem:
- auf eine Formoberfläche (1, 11, 21, 31), die eine zur für den Reflektor gewünschten geometrischen Form komplementäre geometrische Form aufweist, eine Metallschicht (3; 13; 23, 23A; 33, 33A) aufgebracht wird, die eine reflektierende Oberfläche einer Form aufweist, welche zumindest näherungsweise mit der gewünschten geometrischen Form identisch ist,
- auf dieser Metallschicht Fasern (4-7, 7'-4'; 14-17, 17'-14'; 24-27, 27'-24'; 34-37, 37'-34') drapiert werden, die dazu bestimmt sind, den Verbundmaterialträger zu bilden, wobei diese Fasern durch Metallmaterial oder intermetallisches Material, das dazu bestimmt ist, die Metallmatrix zu bilden, metallisiert werden,
- diese Schicht und diese metallisierten Fasern Temperatur- und Druckbedingungen ausgesetzt werden, die geeignet sind, die reflektierende Oberfläche vollständig gegen die Formoberfläche zu plattieren und gleichzeitig ein Diffusionsverschweißen der Schicht mit den metallisierten Fasern und der metallisierten Fasern unter sich zu bewirken, so daß die Schicht im Verlauf der Verfestigung des Trägers in den Verbundmaterial-Träger integriert wird.

2. Herstellungsverfahren nach Anspruch 1, dadurch gekennzeichnet, daß die Fasern aus Kohlenstoff sind.

3. Herstellungsverfahren nach Anspruch 1 oder Anspruch 2, dadurch gekennzeichnet, daß die Fasern symmetrisch zu beiden Seiten einer mittleren Symmetrieoberfläche (S) aufgebracht werden.

4. Herstellungsverfahren nach einem der Ansprüche 1 bis 3, dadurch gekennzeichnet, daß diese Fasern in ungebundenem Zustand drapiert werden.

5. Herstellungsverfahren nach Anspruch 4, dadurch gekennzeichnet, daß diese Fasern auf eine gerade Anzahl von Vliesen aufgeteilt werden, die symmetrisch zu beiden Seiten einer mittleren Symmetrieoberfläche (S) aufgebracht werden.

6. Herstellungsverfahren nach einem der Ansprüche 1 bis 5, dadurch gekennzeichnet, daß die metallisierten Fasern durch physikalische Ablagerung einer Metallisierungschicht in der Dampfphase auf die Fasern erzeugt werden, wodurch die metallisierten Fasern geschmeidig sind.

7. Herstellungsverfahren nach einem der Ansprüche 1 bis 3, dadurch gekennzeichnet, daß diese Fasern im Inneren von Litzen zusammengefaßt sind.

8. Herstellungsverfahren nach Anspruch 7, dadurch gekennzeichnet, daß die Litzen aus metallisierten Fasern durch Eintauchen in ein Bad aus Metallmaterial in geschmolzenem Zustand oder durch Infiltration erhalten werden.

9. Herstellungsverfahren nach einem der Ansprüche 1 bis 3, dadurch gekennzeichnet, daß diese Fasern im Inneren von Platten (34-37; 37'-34') zusammengefaßt sind, in denen diese Fasern eine, zwei oder drei Ausrichtungsrichtungen aufweisen.

10. Herstellungsverfahren nach Anspruch 9, dadurch gekennzeichnet, daß die Platten der metallisierten Fasern mit einer, zwei oder drei Ausrichtungsrichtungen durch Infiltration des Metallmaterials in geschmolzenem Zustand unter Druck erhalten werden.

11. Herstellungsverfahren nach mindestens einem der Ansprüche 1 bis 10, dadurch gekennzeichnet, daß das Metallmaterial oder intermetallische Material der Metallisierung aus der Gruppe ausgewählt wird, die aus Aluminium und seinen Legierungen, aus Magnesium und seinen Legierungen, aus Kupfer und seinen Legierungen, aus Titan und seinen Legierungen und aus Alitierungen, insbesondere aus Titanalitierungen und Nickelalitierungen, besteht.

12. Herstellungsverfahren nach mindestens einem der Ansprüche 1 bis 11, dadurch gekennzeichnet, daß die Metallschicht in Form eines oder mehrerer deformierbarer Blätter (13; 23A; 33, 33A) auf die Formoberfläche aufgebracht wird.

13. Herstellungsverfahren nach mindestens einem der Ansprüche 1 bis 11, dadurch gekennzeichnet, daß die Metallschicht durch Erzeugung eines Metallrohlings mit einer Rohlingsoberfläche, die zumindest näherungsweise identisch mit der gewünschten geometrischen Form ist, erhalten wird, wobei dieser Rohling zumindest auf einem Teil seiner Dicke unter dieser Rohlingsoberfläche unter den Temperatur- und Druckbedingungen deformierbar ist.

14. Verfahren nach Anspruch 13, dadurch gekennzeichnet, daß dieser Rohling unter den Temperatur- und Druckbedingungen in seiner ganzen Dicke deformierbar ist.

15. Verfahren nach Anspruch 13, dadurch gekennzeichnet, daß dieser Metallrohling eine starre Basisschicht und eine Überzugsschicht, die aus einem unter den Temperatur- und Druckbedingungen deformierbaren Material gebildet ist, aufweist.

16. Verfahren nach Anspruch 15, dadurch gekennzeichnet, daß diese Überzugsschicht durch Plasmaspritzen eines oder mehrerer Metallpulver auf diese starre Basisschicht realisiert wird.

17. Herstellungsverfahren nach mindestens einem der Ansprüche 1 bis 11, dadurch gekennzeichnet, daß die Metallschicht durch Plasmaspritzen eines oder mehrerer Metallpulver auf die Formoberfläche aufgebracht wird.

18. Herstellungsverfahren nach mindestens einem der Ansprüche 1 bis 17, dadurch gekennzeichnet, daß die Metallschicht ein oder mehrere Metallmaterial(ien) aufweist, die aus der Gruppe, die aus Aluminium und seinen Legierungen, aus Magnesium und seinen Legierungen, aus Kupfer und seinen Legierungen, aus Nickel und seinen Legierungen, aus Titan und seinen Legierungen, aus Alitierungen, insbesondere Titanalitierungen und Nickelalitierungen, gebildet wird, ausgewählt werden.

19. Herstellungsverfahren nach mindestens einem der Ansprüche 1 bis 18, dadurch gekennzeichnet, daß der Reflektor einer Polierung unterzogen wird.

20. Herstellungsverfahren nach mindestens einem der Ansprüche 1 bis 19, dadurch gekennzeichnet, daß auf der reflektierenden Schicht ein komplementärer Überzug aufgebracht wird.

21. Herstellungsverfahren nach Anspruch 20, dadurch gekennzeichnet, daß dieser komplementäre Überzug aus Gold ist.

22. Verfahren nach mindestens einem der Ansprüche 1 bis 21, dadurch gekennzeichnet, daß auf den Fasern, gegenüber der Metallschicht, eine Schicht (28) zum Schutz gegen Oxidierung aufgebracht wird.

23. Reflektor aus einer reflektierenden Metallschicht (3; 13; 23, 23A; 33, 33A), die sich auf einem Verbundmaterial-träger mit einer Metallmatrix oder einer intermetallischen Matrix erstreckt, dadurch gekennzeichnet, daß die Metallmatritzen oder intermetallischen Matritzen des Trägers und der reflektierenden Schicht ineinander übergreifen.

24. Reflektor nach Anspruch 23, dadurch gekennzeichnet, daß die Metallmaterialien oder intermetallischen Materialien des Trägers und der reflektierenden Schicht verschieden sind und ihre Konzentrationen beim Übergang vom Träger zur reflektierenden Schicht und umgekehrt kontinuierlich variieren.

25. Reflektor nach Anspruch 23, dadurch gekennzeichnet, daß die Metallmaterialien oder intermetallischen Materialien des Trägers und der reflektierenden Schicht identisch sind.

26. Reflektor nach einem der Ansprüche 23 bis 25, dadurch gekennzeichnet, daß der Träger zu beiden Seiten einer mittleren Symmetrieoberfläche (S) symmetrisch ist.

27. Reflektor nach einem der Ansprüche 23 bis 26, dadurch gekennzeichnet, daß der Träger eine Überlagerung von Vliesen (4-7, 7'-4'; 14-17, 17'-14'; 24-27, 27'-24'; 34-37, 37'-34') aus Fasern mit von einem Vlies zum anderen verschiedenen Ausrichtungen aufweist.

28. Reflektor nach einem der Ansprüche 23 bis 27, dadurch gekennzeichnet, daß die Fasern aus Kohlenstoff sind.

29. Reflektor nach einem der Ansprüche 23 bis 28, dadurch gekennzeichnet, daß die Metallmatrix aus einem oder mehreren Materialien gebildet ist, die aus der Gruppe, welche aus Aluminium und seinen Legierungen, aus Magnesium und seinen Legierungen, aus Kupfer und seinen Legierungen, aus Titan und seinen Legierungen, aus Alitierungen, insbesondere Titanalitierungen und Nickelalitierungen, gebildet wird, ausgewählt werden.

30. Reflektor nach einem der Ansprüche 23 bis 29, dadurch gekennzeichnet, daß die reflektierende Metallschicht aus einem oder mehreren Materialien gebildet wird, die aus der Gruppe, die aus Aluminium und seinen Legierungen, aus Magnesium und seinen Legierungen, aus Kupfer und seinen Legierungen, aus Nickel und seinen Legierungen, aus Titan und seinen Legierungen, aus Alitierungen, insbesondere Titanalitierungen und Nickelalitierungen, gebildet wird, ausgewählt werden.

31. Reflektor nach einem der Ansprüche 23 bis 30, dadurch gekennzeichnet, daß sich gegenüber der Metallschicht eine Schicht zum Schutz gegen Oxidierung (28) entlang der Matrix erstreckt.
